# EUROPEAN PATENT APPLICATION

(11) **EP 4 114 019 A1**
(43) Date of publication of application: **04.01.2023**
(21) Application number: 21183512.9
(22) Date of filing: 02.07.2021
(51) Int. Cl.: H04N 21/258, H04N 21/433, H04N 21/44, H04N 21/442, H04N 21/462, H04N 21/81

(54) **METHOD AND SYSTEM FOR CONTROLLING OUTPUT OF A TELEVISION DEVICE**

(71) Applicant: TOP Victory Investments Limited, Kowloon, Hong Kong 999077 (CN)
(72) Inventor: SAVAKKAR K.A,, Amith Kallesh, 560045 Bangalore (IN)
(74) Representative: Brevalex

(57) **Abstract**

A method for controlling a television device (100), is implemented using a processor (110) and includes: detecting user operation associated with a control interface for controlling operations of the television device (100); when it is determined that the television device (100) is powered on, and that the television device (100) has been in an idle state and no user operation has been detected for a predetermined amount of time, controlling the television device (100) to play a selected advertisement; and when user operation is detected, controlling the television device (100) to resume to a state prior to the playing of the selected advertisement.

## Description

The disclosure relates to a method and a system for controlling output of a television device.

Typically, when a television device is powered on, the television device may be controlled to output a video/audio multimedia output from an input source (e.g., an over-the-air (OTA) television signal), a pre-stored multimedia file, etc. It is noted that in some cases, the television device may be powered on but be in an idle state without outputting any video/audio multimedia output.

One object of the disclosure is to provide a method for controlling output of a television device.

According to one embodiment of the disclosure, the television device includes a processor, an operation detector and a control interface. The method is implemented using the processor that executes a service application, and includes steps of:
controlling the operation detector to detect user operation associated with the control interface for controlling operations of the television device;
when it is determined that the television device is powered on and that the television device has been in an idle state and no user operation has been detected for a predetermined time period, accessing a source of advertisement to obtain a selected advertisement;
controlling the television device to play the selected advertisement; and
when user operation is detected while the selected advertisement is being played, controlling the television device to resume a state that the television device was in prior to playing of the selected advertisement.

Another object of the disclosure is to provide a system that is configured to implement the above-mentioned method.

According to one embodiment of the disclosure, the television device includes a processor, an operation detector and a control interface, characterized in that the processor is configured to execute a service application, and to implement steps of:
controlling the operation detector to detect user operation associated with the control interface for controlling operations of the television device;
when it is determined that the television device is powered on and that the television device has been in an idle state and no user operation has been detected for a predetermined time period, accessing a source of advertisement to obtain a selected advertisement;
controlling the television device to play the selected advertisement; and
when user operation is detected while the selected advertisement is being played, controlling the television device to resume a state that the television device was in prior to playing of the selected advertisement.

Other features and advantages of the disclosure will become apparent in the following detailed description of the embodiments with reference to the accompanying drawings, of which:
Figure 1 is a block diagram illustrating a television system that includes a television device according to one embodiment of the disclosure;
Figure 2 is a schematic diagram illustrating a television device according to one alternative embodiment of the disclosure;
Figure 3 is a flow chart illustrating steps of a method for controlling output of a television device according to one embodiment of the disclosure; and
Figure 4 is an exemplary advertisement table stored in a source of advertisement.

Before the disclosure is described in greater detail, it should be noted that where considered appropriate, reference numerals or terminal portions of reference numerals have been repeated among the figures to indicate corresponding or analogous elements, which may optionally have similar characteristics.

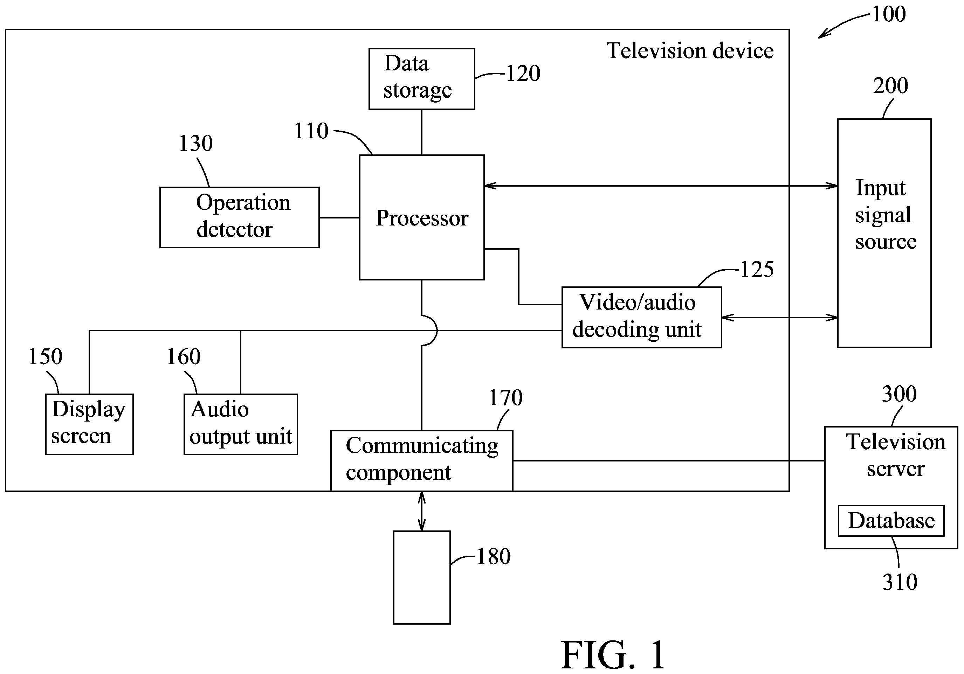

Figure 1 illustrates a television system that includes a television device 100 according to an embodiment of the disclosure. In this embodiment, the television device 100 includes a processor 110, a data storage 120, a video/audio decoding unit 125, an operation detector 130, a display screen 155, an audio output unit 160, a communication component 170 and a control interface.

The processor 110 may include, but not limited to, a single core processor, a multi-core processor, a dual-core mobile processor, a microprocessor, a microcontroller, a digital signal processor (DSP), a field-programmable gate array (FPGA), an application specific integrated circuit (ASIC), a radiofrequency integrated circuit (RFIC), and/or the like.

The data storage 120 may be embodied using one or more of a hard disk, a solid-state drive (SSD) and other non-transitory storage medium, and stores at least one user profile and a set of software applications therein. The set of software applications may include an operating system (OS) to be executed by the processor 110, and a background service application to be executed by the processor 110 and run "in the background" when the television device 100 is powered on. In this embodiment, the background service application may be implemented using a Java service application.

The operation detector 130 may be embodied using a microprocessor, or a set of software applications stored in the data storage 120 and executed by the processor 110 (e.g., the background service application) .

The video/audio decoding unit 125 may be embodied using a coder-decoder (codec) circuit, and is electrically connected to the processor 110 and an input signal source 200. The video/audio decoding unit 125 is configured to receive a source signal from the input signal source 200, and is controlled by the processor 110 to perform a decoding operation on the source signal so as to obtain a video signal and an audio signal from the source signal. The input signal source 200 may be, for example, a set-top box providing the source signal that may be one of an over-the-air (OTA) television signal, a satellite television signal, a cable television signal, a media on demand (MOD) signal, a digital streaming signal, etc. The source signal may be in the form of an analog signal or a digital signal, and may include an electronic program guide (EPG) containing program metadata regarding a program. In some embodiments, the input signal source 200 may include an external data storage (e.g., a portable hard drive, solid disk drive, etc., or a digital optical disc storage such as a Digital Versatile Disc or a blue-ray disc that can be accessed by a player) that is connected to the processor 110 via a connecting cable, and that stores one or more multimedia files therein. In use, the user may operate the control interface to access the multimedia files, and to control the television device 100 to play the multimedia files.

The display screen 155 and the audio output unit 160 are electrically connected to the processor 110 and the video/audio decoding unit 125, and are controlled by the processor 110 to display the video signal and to output the audio signal, respectively. For example, the audio output unit 160 is a speaker built in the television device 100. In some embodiments, the audio output unit 160 may be an external speaker connected to the processor 110 using a wireless communication mechanism such as Wi-Fi, Bluetooth^{®}, etc.

The audio output unit 160 is controlled to output the audio signal based on a current output setting which may be adjusted manually. The current output setting includes at least a volume setting that is related to a current output volume. In some cases, the television device 100 may be provided with more advanced sound control, including a sound equalizer (which may be embodied using physical circuitry or software programs constituting of filters) for adjusting energy levels of components of the audio signal at different frequency bands.

The communication component 170 is electrically connected to the processor 110, and may include a short-range wireless communication module supporting a short-range wireless communication network using a wireless technology of Bluetooth^{®} and/or Wi-Fi, etc., and a mobile communication module supporting telecommunication using Long-Term Evolution (LTE), the third generation (3G) and/or fourth generation (4G) of wireless mobile telecommunications technology, and/or the like.

The control interface may include a control panel (not shown) disposed on the outer case of the television device 100. The control panel includes one or more buttons that enable the user to operate the television device 100 to switch to an intended channel, to output the audio signal with an intended output volume, or to change one of the setting options. In this embodiment, the control interface further includes a remote control 180, and the communication component 170 is in communication with the remote control 180 for receiving a control signal therefrom. The control signal may be for triggering the television device 100 to switch to an intended channel, to output the audio signal with an intended output volume, or to change one of a plurality of setting options of the television device 100. In other embodiments, the remote control 180 may include additional buttons to enable more control options for the television device 100. In some embodiments, the remote control 180 is an infrared remote control configured to output the control signal in a form of infrared light, and the communication component 170 is an infrared module including an infrared receiver for receiving the infrared light.

It is noted that in some embodiments, some components of the television device 100 (such as the video/audio decoding unit 125, the operation detector 130) may be embodied using, for example, microprocessors that execute software instructions, firmware, etc.

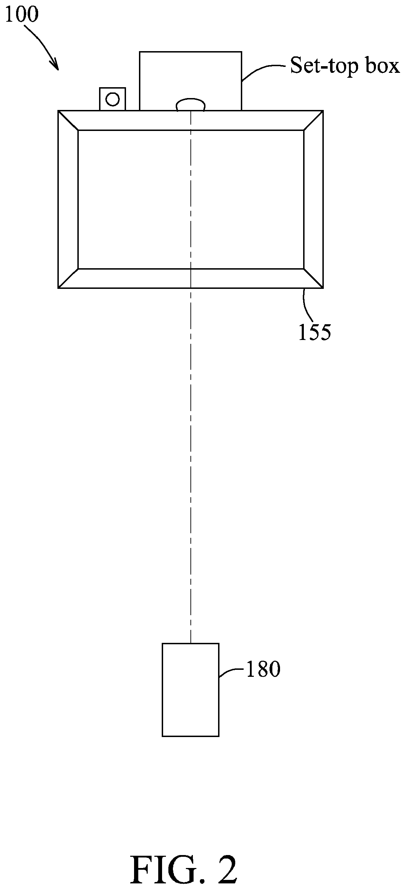

In this embodiment, the television device 100 may be embodied as a television system on chip (TV SoC). As shown in Figure 2, in some embodiments, some components of the television device 100 (such as the processor 110, the video/audio decoding unit 125, the data storage 120 and the communication component 170) may be integrated into a set-top box (STB).

The communication component 170 may be further coupled to a television server 300 of the television system via a wireless connection. The television server 300 includes a database 310 that includes a list of advertisements each being a multimedia file.

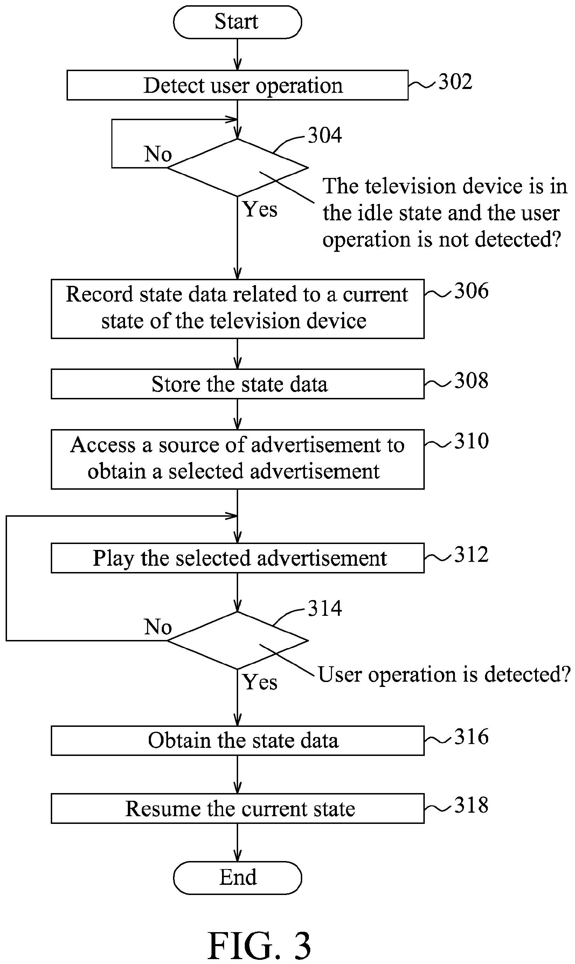

Figure 3 is a flow chart illustrating steps of a method for controlling output of a television device according to one embodiment of the disclosure. The method may be implemented by the television system described with reference to Figures 1 and 2.

In use, when the television device 100 is powered on, a user may operate the control interface (e.g., the remote control 180) to enable the television device 100 to perform a number of functions, such as broadcasting a television program. In this embodiment, the processor 110 is also configured to execute the background service application, such that the background service application is running in the background (i.e., not perceived by the user).

When the background service application is activated, in step 302, the processor 110 is configured to control the operation detector 130 to detect user operation, and to determine whether there is user operation based on the detection.

Specifically, the operation detector 130 is configured to detect the user operation by detecting one or more input signals received from the control interface, indicating that the user is operating the control interface.

In the case that the television device 100 receives the source signal from the input signal source 200, the processor 110 controls the video/audio decoding unit 125 to perform the decoding operation on the source signal so as to obtain the video signal and the audio signal from the source signal. Then, the processor 110 controls the display screen 155 to display the video signal (i.e., visual content of the television program), and controls the audio output unit 160 to output the audio signal (i.e., audio content of the television program).

In some cases, the television device 100 may be left in an idle state. In the disclosure, the term "idle state" may represent a number of situations, including that the display screen 155 is displaying a channel selection screen (meaning that no specific channel is selected, and therefore the display screen 155 is not outputting content from any channel), or that the display screen 155 is displaying a homepage of a media platform (such as a stream service, a video platform, etc.). In some embodiments, the idle state may include a situation that the display screen 155 is displaying an input source selection menu that enables the user to select from one of the available input sources. It is noted that, according to different types of the selected input sources, different situations may be deemed as the idle state. For example, in the case that the selected input source is the digital optical disc storage, the situation that the display screen 155 is displaying a selection screen provided by the digital optical disc storage may be deemed as the idle state. In the case that the selected input source is the external data storage, the situation that the display screen 155 is displaying a data folder containing the multimedia files stored in the external data storage may be deemed as the idle state. In another case, after a multimedia file is selected from the selected input source (e.g., the media platform, the external data storage, the digital optical disc storage, etc.), when the multimedia file is selected and played, the situation that the user operates the control interface to pause playback of the multimedia file and accordingly the display screen 155 is displaying a pause screen during playback of the multimedia file may be deemed as the idle state.

In step 304, the processor 110 determines whether the television device 100 is powered on and is currently in the idle state and the user operation is not detected by the operation detector 130 for a predetermined time period (e.g., 5 to 10 minutes). When the determination is affirmative, the processor 110 may determine that the television device 100 has not been broadcasting anything substantial for a while, and an advertisement may be played on the television device 100 in place until the user operates the control interface again. Accordingly, the flow proceeds to step 306. Otherwise, the flow goes back to step 304 to continue the determination.

In step 306, the processor 110 records state data related to a current state of the television device 100. The current state may include a current screen that the display screen 155 is displaying, a progress of the multimedia file that is paused, etc.

Then, in step 308, the processor 100 controls the data storage 120 to store the state data related to the current state of the television device 100.

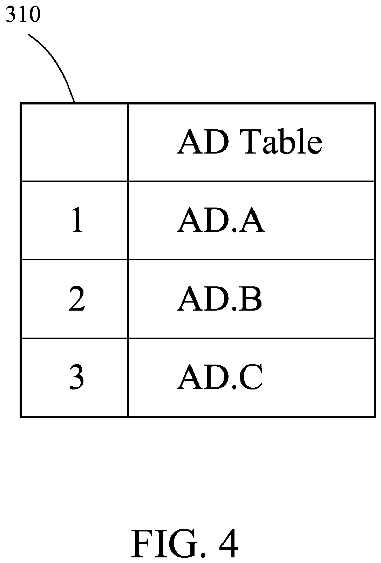

In step 310, the processor 110 accesses a source of advertisement to obtain a selected advertisement. In this embodiment, the source of advertisement is the television server 300 which stores the list of advertisements (for example, a table 310 as shown in Figure 4). Specifically, the processor 110 may transmit a request for advertisement to the television server 300.

In response to receipt of the request for advertisement, the television server 300 may determine which one of the advertisements stored therein may be played by the television device 100, and subsequently select one of the advertisements as the selected advertisement, and provide the selected advertisement to the television device 100. For example, the television server 300 may provide the selected advertisement to the television device 100 by providing a link of the selected advertisement to the television device 100 or by directly transmitting the multimedia file of the selected advertisement to the television device 100. It is noted that the determination by the television server 300 of the selection of the selected advertisement may be done based on a record of viewing history of the user and/or a record of the advertisements that have been played by the television device 100. In some embodiments, the processor 110 may transmit a location of the television device 100, and the selection of the selected advertisement may be done based on the location of the television device 100 (e.g., selecting the advertisements that are provided by parties local to the location of the television device 100).

It is noted that in some embodiments, the source of advertisement may be the data storage 120 which stores the list of advertisements therein. In this case, the processor 110 is configured to determine what advertisement(s) is/are to be selected as the selected advertisement.

In step 312, the processor 110 controls the television device 100 to play the selected advertisement, which may include visual element and/or audio element that can be outputted by the display screen 155 and the audio output unit 160, respectively.

During playback of the selected advertisement, in step 314, the processor 110 continues to control the operation detector 130 to detect user operation, and determines whether user operation is detected. When it is determined that user operation is detected (e.g., the user operates the remote control 180) while the selected advertisement is being played, the flow proceeds to step 316. Otherwise, the flow goes back to step 312 with the selected advertisement being played continuously.

It is noted that, in some embodiments, in the case that one selected advertisement has been completely played, and no user operation is detected, the processor 110 may immediately send another request for advertisement to the television server 300 to access the source of advertisement to obtain another selected advertisement. In some embodiments, the operation of step 310 involves obtaining multiple selected advertisements, and in the case that no user operation is detected, the processor 110 controls the television device 100 to consecutively play the selected advertisements.

Alternatively, after one selected advertisement has been completely played, the processor 110 may stand by for a predetermined period of time (e.g., 1 to 2 minutes) before accessing the source of advertisement. Afterward, the flow goes back to step 312, in which the processor 110 controls the display screen 155 to play said another selected advertisement, and continues with the operations of step 314.

In step 316, the processor 110 accesses the data storage 120 to obtain the state data, and then, in step 318, the processor 110 controls the television device 100 to resume the current state, which is the state of the television device 100 prior to playing of the selected advertisement, based on the state data thus obtained. Specifically, the processor 110 may control the display screen 155 to display the screen that was being displayed prior to the playing of the selected advertisement, and the user may operate the control interface to control the television device 100 as usual.

To sum up, the embodiments of the disclosure provide a method and a system for controlling output of a television device. Specifically, when it is determined that the television device is in an idle state and no user operation has been detected for a predetermined time period, the processor of the television device accesses the source of advertisement to obtain a selected advertisement, and controls the television device to play the selected advertisement. In this manner, advertisements may be played during the times when the television device is not playing any substantial content.

In the description above, for the purposes of explanation, numerous specific details have been set forth in order to provide a thorough understanding of the embodiment. It will be apparent, however, to one skilled in the art, that one or more other embodiments may be practiced without some of these specific details. It should also be appreciated that reference throughout this specification to "one embodiment," "an embodiment," an embodiment with an indication of an ordinal number and so forth means that a particular feature, structure, or characteristic may be included in the practice of the disclosure. It should be further appreciated that in the description, various features are sometimes grouped together in a single embodiment, figure, or description thereof for the purpose of streamlining the disclosure and aiding in the understanding of various inventive aspects, and that one or more features or specific details from one embodiment may be practiced together with one or more features or specific details from another embodiment, where appropriate, in the practice of the disclosure.

## Claims

1. A method for controlling a television device (100), the television device (100) including a processor (110), an operation detector (130) and a control interface, the method being implemented using the processor (110) that executes a service application, the method being **characterized by**:
controlling the operation detector (130) to detect user operation associated with the control interface for controlling operations of the television device (100);
when it is determined that the television device (100) is powered on and that the television device (100) has been in an idle state and no user operation has been detected for a predetermined time period, accessing a source of advertisement to obtain a selected advertisement;
controlling the television device (100) to play the selected advertisement; and
when user operation is detected while the selected advertisement is being played, controlling the television device (100) to resume a state that the television device (100) was in prior to playing of the selected advertisement.

2. The method of Claim 1, the control interface including a remote control (180), the method being **characterized in that** the detecting of user operation includes controlling the operation detector (130) to detect user operation by detecting an input signal received from the control interface.

3. The method of any one of Claims 1 and 2, **characterized in that** the determination that the television device (100) is in the idle state includes determining whether the television device (100) is in one of the following conditions:
that the television device (100) is displaying a channel selection screen;
that the television device (100) is displaying a homepage of a media platform; and
that the television device (100) is displaying a pause screen during playback of a multimedia file.

4. The method of any one of Claims 1 to 3, the processor being connected to a data storage (120), the method further **characterized by**, after determining that the television device (100) is powered on and is in the idle state and no user operation has been detected for the predetermined time period:
recording state data related to a current state of the television device (100); and
controlling the data storage (100) to store the state data related to the current state of the television device (100).

5. The method of Claim 4, **characterized in that** the controlling the television device (100) to resume the state that the television device (100) was in prior to playing of the selected advertisement includes
accessing the data storage (120) to obtain the state data; and
controlling the television device (100) to resume the current state based on the state data.

6. The method of Claim 4, further **characterized by**:
transmitting a location of the television device (100) to the source of advertisement, so as to enable the source of advertisement to select the selected advertisement based on the location of the television device (100).

7. The method of Claim 1, further **characterized by**:
after the television device (100) has completed playing the selected advertisement, when it is determined that no user operation is detected, accessing the source of advertisement to obtain another selected advertisement; and
controlling the television device (100) to play said another selected advertisement.

8. A television device (100) including a processor (110), an operation detector (130) and a control interface, **characterized in that** said processor (110) is configured to execute a service application, and to implement steps of:
controlling said operation detector (130) to detect user operation associated with said control interface for controlling operations of the television device (100);
when it is determined that the television device (100) is powered on and that the television device (100) has been in an idle state and no user operation has been detected for a predetermined time period, accessing a source of advertisement to obtain a selected advertisement;
controlling the television device (100) to play the selected advertisement; and
when user operation is detected while the selected advertisement is being played, controlling the television device (100) to resume a state that the television device (100) was in prior to playing of the selected advertisement.

9. The television device (100) of Claim 8, said control interface including a remote control (180), **characterized in that** said processor (110) is programmed to detect user operation by controlling said operation detector (130) to detect user operation by detecting an input signal received from said control interface.

10. The television device (100) of any one of Claims 8 and 9, **characterized in that** said processor (110) is programmed to determine that the television device (100) is in the idle state by determining whether the television device (100) is in one of the following conditions:
that the television device (100) is displaying a channel selection screen;
that the television device (100) is displaying a homepage of a media platform; and
that the television device (100) is displaying a pause screen during playback of a multimedia file.

11. The television device (100) of any one of Claims 8 to 10, further **characterized by** a data storage (120) connected to said processor (100), wherein, after determining that the television device (100) is powered on and is in the idle state and no user operation has been detected for the predetermined time period, said processor (110) is programmed to:
record state data related to a current state of the television device (100); and
control said data storage (120) to store the state data related to the current state of the television device (100).

12. The television device (100) of Claim 11, **characterized in that** said processor (110) is programmed to control the television device (100) to resume the state that the television device (100) was in prior to playing of the selected advertisement by:
accessing said data storage (120) to obtain the state data; and
controlling the television device (100) to resume the current state based on the state data.

13. The television device (100) of Claim 11, **characterized in that** said processor (110) is programmed to:
transmit a location of the television device (100) to the source of advertisement, so as to enable the source of advertisement to select the selected advertisement based on the location of the television device (100).

14. The television device (100) of Claim 8, **characterized in that** said processor (110) is programmed to:
after the television device (100) has completed playing the selected advertisement, when it is determined that no user operation is detected, access the source of advertisement to obtain another selected advertisement; and
control the television device (100) to play said another selected advertisement.
